# FASCICULE DE BREVET EUROPEEN

(11) **EP 0 437 395 B1**
(45) Date de publication et mention de la délivrance du brevet: **04.08.1993**
(21) Numéro de dépôt: 91400034.4
(22) Date de dépôt: 09.01.1991
(51) Int. Cl.: B29C 43/18, B29C 45/14, B29C 67/14, B44C 5/04

(54) **Procédé de fabrication d'articles moulés en matière thermodurcissable comportant un décor incorporé**
Verfahren zum Herstellen eines Formkörpers aus wärmehärtbarem Kunstharz mit einer Dekorschicht
Method of manufacturing a moulded article from thermohardening plastic in corporating a decorative layer

(30) Priorité: 10.01.1990 FR 9000218
(43) Date de publication de la demande: 17.07.1991
(73) Titulaire: CRAY VALLEY SA, 92800 Puteaux (FR)
(72) Inventeur: Cocheteux, Daniel, F-59134 Fournes en Weppes (FR); Golabeck, William, F-62290 Noeux les Mines (FR); Jannel, Jean-Claude, F-62320 Rouvroy (FR)
(74) Mandataire: Chaillot, Geneviève

(56) Documents cités:
- FR-A- 1 294 377
- FR-A- 2 162 005
- GB-A- 1 401 748
- US-A- 4 329 134
- US-A- 4 610 835

## Description

La présente invention concerne un procédé de fabrication d'articles moulés, et elle a plus particulièrement pour objet un procédé de fabrication d'articles moulés en matière thermodurcissable, qui comportent un décor incorporé.

Des articles moulés en matière thermodurcissable sont connus depuis longtemps. Parmi ces articles moulés, on peut citer tous les équipements et les accessoires de salles de bains ou encore tous les articles en matière thermodurcissable utilisés dans les cuisines, en particulier vaisselle, plateaux, etc. Les articles moulés utilisés jusqu'à présent pour la fabrication d'articles utilisés dans les accessoires de cuisines sont fabriqués à partir, soit de résines de mélamine ou phénoliques de moulage, soit de résines polyesters. On connaît, par exemple, dans le domaine des accessoires de cuisine utilisés dans les collectivités, en particulier dans le domaine des plateaux, des articles fabriqués à partir de résines mélaminées que l'on moule le plus souvent par compression ou injection. Ces plateaux présentent l'inconvénient majeur d'avoir des caractéristiques mécaniques médiocres à un point tel qu'ils cassent facilement. Par ailleurs, il faut noter qu'ils présentent du point de vue visuel un aspect peu séduisant. Il est aussi connu de fabriquer des plateaux à partir de résines polyesters et d'une couche décorative en mettant en oeuvre des techniques de moulage: les principaux inconvénients de ces plateaux sont qu'ils sont doués de propriétés mécaniques moyennes; par ailleurs, l'aspect visuel du plateau fini laisse entrevoir en surface les renforts minéraux utilisés pour sa fabrication en particulier les fibres de verre. Par ailleurs, on note parfois que ces plateaux dégagent de fortes odeurs de styrène, lequel est habituellement mélangé au polyester après sa synthèse.

Le besoin se fait donc sentir de disposer d'ustensiles de cuisine, en particulier de plateaux, présentant de bonnes caractéristiques mécaniques doublées d'un fini attractif sur la surface extérieure.

On connaît, par le brevet français FR-A-1 294 377, un procédé permettant de donner des surfaces régulières et brillantes et/ou pouvant résister aux taches à des articles de table en résine synthétique, procédé suivant lequel on place dans un moule une résine thermodurcissable, en particulier une résine de mélamine, on conduit un durcissement partiel de la résine, on applique sur la surface une feuille décorative et l'on soumet l'ensemble à la chaleur et la pression pour déterminer un autre durcissement partiel, puis on dépose une résine mélamine ou benzoguanamine-aldéhyde thermodurcissable, granulaire et fusible, et on poursuit le moulage jusqu'à obtention d'un article unitaire. Ce procédé présente notamment les inconvénients d'avoir à conduire des durcissements partiels; de plus, comme indiqué ci-dessus, les articles en résine de mélamine ainsi obtenus, ne présentent pas la résistance mécanique voulue.

On connaît aussi, par le brevet américain US-A-4 610 835, un procédé suivant lequel on place un film prédécoré contre le fond d'un moule, on verse un mélange liquide d'une composition durcissable à la température ambiante, notamment de polyuréthanne, puis on place un panneau renforcé par un mat de fibres de verre qui est prémoulé et dont les fibres font saillie en surface, et on applique une pression, afin que le film prédécoré soit lié de façon permanente au panneau, les fibres en saillie ne donnant plus de surface rugueuse grâce à la couche de résine intermédiaire. Ce procédé, orienté surtout vers l'obtention de panneaux en polyuréthanne, conduit à un article dont le film décoré est positionné en surface et ne pourrait donc procurer la résistance recherchée selon l'invention, aux produits alimentaires et d'entretien.

La Société déposante a recherché une solution au problème posé, à savoir celui d'obtenir, de façon simple, des produits moulés qui présentent de bonnes caractéristiques mécaniques associées à un état de surface présentant un bel aspect, et qui résistent à tous les produits alimentaires et à tous les produits de lavage nécessaires à leur entretien.

Ce problème est résolu, conformément à la présente invention, par un procédé de fabrication d'articles moulés en matière thermodurcissable, comportant un décor incorporé, qui est caractérisé par le fait qu'on applique, dans un moule adapté à la compression ou l'injection, une résine polyester catalysée renforcée par des fibres de verre, on dépose ensuite sur cette couche de résine polyester chargé un mat ou un tissu constitué de fibres de verre, l'ensemble étant alors cuit et réticulé par fermeture du moule, chauffage et mise en pression, on ouvre à nouveau le moule, on dépose ensuite un élément décoratif constitué de tissu ou de papier, on verse ensuite un vernis à base de polyester catalysé, on cuit ensuite l'ensemble par fermeture du moule, chauffage et remontée de la pression.

Le procédé selon la présente invention consiste à appliquer dans un moule adapté à la compression ou à l'injection une résine polyester catalysée renforcée par des fibres de verre. Les résines polyesters utilisées sont des résines classiques, de préférence à retrait compensé (résines "low profile"), qui sont mises en oeuvre à l'aide de catalyseurs classiques du type peroxyde. Ces résines polyesters contiennent divers additifs, pigments et charges minérales, en particulier des fibres de verre en quantité comprise entre environ 5 et 35% en poids. Dans le commerce, ces produits sont vendus, par exemple, sous le nom de composés de moulage dans la masse (en anglais "bulk molding compounds": BMC). Selon l'invention, après application de la couche de composition de résine polyester présente dans le moule, on dépose ensuite sur cette couche un mat ou un tissu constitué de fibres de verre: ce mat ou ce tissu peut être constitué de fibres de verre, de voiles de verre ou de fils continus de verre.

Après dépôt dans le moule, la résine polyester et le mat ou le tissu de fibres de verre sont cuits et réticulés par fermeture du moule, chauffage et mise en pression. La température du moule pendant cette étape est comprise entre environ 130 et 170°C, la durée du chauffage dépend de l'épaisseur de l'ensemble, la pression étant au moins égale à environ 3 MPa.

Selon l'invention, après cette première étape, on ouvre le moule et on dépose ensuite sur l'ensemble un élément décoratif constitué de tissu ou de papier. Bien évidemment la nature de l'élément décoratif doit être telle que celui-ci puisse résister à la fois à l'action du styrène et à la chaleur du moule; par ailleurs, il doit être suffisamment souple pour éviter sa déformation dans les angles et son plissage sur la surface. Après avoir disposé l'élément décoratif, on verse ensuite un vernis à base de résine polyester catalysé par un peroxyde. Le vernis polyester est choisi de façon à donner, après réticulation, un produit brillant, transparent et clair, qui doit par ailleurs mettre en valeur les teintes de l'élément décoratif.

Selon l'invention, on choisit des vernis qui présentent de bonnes propriétés pour ce qui concerne la transparence, les brillances et la clarté. Ces vernis ne contiennent pas de charges minérales. Après avoir déposé le vernis de polyester, on ferme à nouveau le moule que l'on met à nouveau en pression et que l'on chauffe de façon à réaliser la réticulation et le fluage du vernis polyester sur la surface de l'article moulé.

La mise en oeuvre du procédé de la présente invention permet de fabriquer des articles moulés dans lesquels l'élément décoratif est parfaitement lié avec la sous-couche de résine polyester chargée par l'intermédiaire du mat ou du tissu de fibres de verre.

Les articles moulés fabriqués selon le procédé de l'invention sont tous les articles moulés fabriqués à partir de polyesters en particulier tous les accessoires de cuisine, tels que plateaux, vaisselles pour fours à micro-ondes, et, de façon générale, tous les articles moulés en polyesters qui puissent recevoir un élément décoratif. Les techniques de moulage mises en oeuvre pour le procédé de l'invention sont les techniques classiques utilisées dans cette technologie : moulage par compression ou injection.

L'exemple suivant illustre la présente invention.

### Exemple

Dans un moule pour fabriquer des plateaux comportant des plateaux chromés, on introduit 420 parties d'une résine polyester de BMC vendu sous la marque NORSOMIX par la Société NORSOCHIM. Cette résine est constituée, en poids, de 32,2% de résine polyester, 52,8% de charges minérales et 15% de fibres de verre. Cette résine est additionnée de 0,5% en poids de catalyseur type peroxyde.

On dépose, sur cette résine, un mat de fibres de verre (150 g/m²) sur toute la surface du moule. Le moule est ensuite fermé et mis sous pression (8 MPa). Sa température est :
- température matrice: : 138°C
- température poinçon: : 136°C.

Après une mise sous pression de 20 secondes, on ouvre le moule, on dépose ensuite un élément décoratif constitué de tissu peint. Puis on verse ensuite 70 parties en poids d'un vernis constitué de résine polyester additionnée de 0,5% en poids de peroxyde de benzoyle comme catalyseur et d'un agent de démoulage. Ce vernis présente les caractéristiques suivantes :
- viscosité à 25°C: : 1,45 Pa.s
- extrait sec: : 68%

On referme ensuite le moule que l'on remet en pression pendant 60 secondes. On démoule ensuite le plateau. Ce plateau est ensuite soumis aux tests de lavage dans un lave-vaisselle après avoir été préalablement taché avec du vin, de l'huile et d'autres produits alimentaires: il subit avec succès les tests de lavage sans rien perdre de sa brillance ni de sa tenue mécanique.

## Revendications

1. Procédé de fabrication d'articles moulés, en matière thermodurcissable comportant un décor incorporé, caractérisé par le fait qu'on applique, dans un moule adapté à la compression ou l'injection, une résine polyester catalysée renforcée par des fibres de verre, on dépose ensuite sur cette couche de résine polyester chargé un mat ou un tissu constitué de fibres de verre, l'ensemble étant alors cuit et réticulé par fermeture du moule, chauffage et mise en pression, on ouvre à nouveau le moule, on dépose ensuite un élément décoratif constitué de tissu ou de papier, on verse ensuite un vernis à base de polyester catalysé, on cuit l'ensemble par fermeture du moule, chauffage, et remontée de la pression.

2. Procédé selon la revendication 1, caractérisé par le fait que la résine polyester renforcée de fibres de verre contient de 5 à 35% en poids de fibres de verre.

3. Procédé selon l'une des revendications 1 et 2, caractérisé par le fait que le vernis à base de polyester ne contient pas de charge.

4. Application du procédé tel que défini à l'une des revendications 1 à 3, à la fabrication d'accessoires de cuisines, notamment de plateaux.

## Patentansprüche

1. Verfahren zur Herstellung von-Duroplast-Formteilen mit eingearbeiteter Verzierung, das durch die Tatsache gekennzeichnet ist, daß in einer für das Formpressen oder Spritzgießen geeigneten Form ein glasfaserverstärktes katalysiertes Polyesterharz angewendet, dann auf dieser geladenen Polyesterharzschicht eine Glasfasermatte oder ein Glasfasergewebe aufgebracht und das ganze nun durch Schließen der Form, Erhitzen und Druckeinwirkung gebrannt und vernetzt, sodann die Form wieder geöffnet und dann ein Verzierungselement aus Gewebe oder Papier aufgebracht, dann ein Lack auf der Basis katalysierten Polyesters aufgetragen und nun das ganze durch Schließen der Form, Erhitzen und Druckerhöhung gebrannt wird.

2. Verfahren gemäß Anspruch 1, das durch die Tatsache gekennzeichnet ist, daß das glasfaserverstärkte Polyesterharz zwischen 5 und 35 Gewichtsprozent Glasfaser enthält.

3. Verfahren gemäß einem der Ansprüche 1 und 2, das durch die Tatsache gekennzeichnet ist, daß der Lack auf Polyesterbasis keine Ladung enthält.

4. Anwendung des Verfahrens wie in einem der Ansprüche 1 bis 3 definiert, für die Herstellung von Küchenutensilien, insbesondere von Tabletts.

## Claims

1. Process for the manufacture of moulded articles made of thermosetting material comprising an incorporated decoration, characterised in that a catalysed polyester resin reinforced with glass fibres is applied in a mould which is suitable for compression or injection, a mat or a fabric consisting of glass fibres is then deposited on this layer of filled polyester resin, the whole being then cured and crosslinked by closing the mould, heating and pressurising, the mould is reopened, a decorative component consisting of fabric or paper is next deposited, a varnish based on catalysed polyester is next poured, the whole is cured by closing the mould, heating and repressurising.

2. Process according to Claim 1, characterised in that the polyester resin reinforced with glass fibres contains from 5 to 35 % by weight of glass fibres.

3. Process according to either of Claims 1 and 2, characterised in that the varnish based on polyester does not contain any filler.

4. Application of the process as defined in any one of Claims 1 to 3, to the manufacture of kitchen accessories, especially trays.
